# EUROPÄISCHE PATENTANMELDUNG

(11) **EP 1 475 360 A1**
(43) Veröffentlichungstag der Anmeldung: **10.11.2004**
(21) Anmeldenummer: 03010130.7
(22) Anmeldetag: 05.05.2003
(51) Int. Cl.: C04B 24/00, C04B 41/62, C23F 11/167, C07F 9/40, C07F 9/24

(54) **Verwendung von Alkoxygruppen aufweisenden Estern von Phosphor-Sauerstoff-Säuren als Korrosionsschutzmittel für Stahlbeton**

(71) Anmelder: Sika Technology AG, 6340 Baar (CH)
(72) Erfinder: Wombacher, Franz, 8917 Oberlunkhofen (CH); Marazzani, Beat, 8102 Oberengstringen (CH); Mäder, Urs, 8500 Frauenfeld (CH)
(74) Vertreter: Isler, Jörg

(57) **Zusammenfassung**

Hydraulisch abbindende Zusammensetzung, welche Alkoxygruppen umfassende Ester oder Estersalze von Phosphor-Sauerstoff-Säuren enthält. Oberflächenmodifizierungsmittel für Baustahl, welches Alkoxygruppen umfassende Ester oder Estersalze von Phosphor-Sauerstoff-Säuren enthält oder daraus besteht.

Die hydraulisch abbindende Zusammensetzung und das Oberflächenmodifizierungsmittel eignen sich zum Schutz von Stahlbeton.

## Beschreibung

### Technisches Gebiet

Die Erfindung betrifft den Korrosionsschutz von Stahlbeton. Insbesondere betrifft sie hydraulisch abbindende Zusammensetzungen sowie Oberflächenmodifizierungsmittel für Baustahl.

### Stand der Technik

Stahl als Verstärkungsmittel in Bauwerken ist weitverbreitet. Von besonderer Wichtigkeit ist Betonstahl. Der Stahl wird in einem hydraulisch abbindendem Material eingelegt und verstärkt dieses. Von besonderer Wichtigkeit ist Stahlbeton. Die Korrosion von Stahl, welcher in hydraulisch abgebundenen Materialien vorhanden ist, ist von grösstem wirtschaftlichen Interesse. Durch die Korrosion der Stahleinlage wird deren Festigkeit und somit die Festigkeit des Betons vermindert. Darüber hinaus weisen die Korrosionsprodukte wie beispielsweise Eisenoxide oder Eisenoxidhydrate ein grösseres Volumen auf, als der nicht korrodierte Stahl selbst. Als Folge daraus entstehen Spannungen im Beton, die zu Rissen oder zum Abplatzen von ganzen Stücken führen können.

Bei der Korrosion des im Beton vorhandenen Stahls handelt es sich um einen weitgehend diffusionskontollierten Prozess. In die Poren des Betons können Wasser und Sauerstoff eindiffundieren. Porenwasser enthält unter anderem gelöstes Ca(OH)₂ und weist in intaktem Beton einen pH-Wert von ca. 13 auf. Bei diesem pH-Wert sind in Beton eingebettete Stahleinlagen durch eine Passivierungsschicht vor Korrosion geschützt. Durch das Eindiffundieren von atmosphärischem CO₂ in die Poren kommt es unter anderem zur Bildung von unlöslichem CaCO₃ und der pH-Wert des Porenwassers sinkt auf Werte von unter 9 ab. Bei diesen pH-Werten verliert die Passivierungsschicht auf dem Stahl jedoch ihre Wirkung. Die Wirkung der Passivierungsschicht kann auch durch Chlorid-Ionen beeinträchtigt oder aufgehoben werden. Chlorid-Ionen können beispielsweise durch Kontakt des Betons mit Meerwasser oder Enteisungsmitteln in den Beton eindringen. Die Menge von eindringendem CO₂ oder Chlorid ist bei der Verwendung von besonders dichtem, porenarmem Beton geringer. Das Eindringen kann aber auch auf diese Art nicht vollständig verhindert werden. Ausserdem verändern sich bei Veränderung der Struktur des Betons auch dessen Eigenschaften, was je nach der vorgesehenen Anwendung häufig unerwünscht ist. Die Möglichkeit, porenarmen Beton zu verwenden, ist daher in vielen Fällen nicht gangbar.

Es ist bekannt, Frischbeton Korrosionsinhibitoren wie beispielsweise Nitrite, Amine, Alkanolamine, deren Mischungen mit anorganischen oder organischen Säuren oder Phosphorsäureestern zuzusetzen. Es ist ausserdem bekannt, Phosphonsäuren oder Phosphonsäure-Derivate zum Korrosionsschutz in Beton einzusetzen. DE-A 36 29 234 offenbart den Zusatz von Salzen, insbesondere Na-Salzen verschiedener Alkylphosphonsäuren als Zusatz zu Beton- und Mörtelmischungen. GB-A 2 248 612 und JP-A 03-159945 offenbaren Amino- oder Hydroxygruppen aufweisende Phosphonsäuren als Zusatz zu Beton.

Phosphonsäuregruppen aufweisende Verbindungen wie Amino-trismethylenphosphonsäure oder 2-Phosphonobutan-1,2,4-tricarbonsäure sind bekannte Korrosionsinhibitoren für Stahl. Diese Substanzen verzögern jedoch die Erhärtung von hydraulisch abbindenden Bindemitteln. Für eine Korrosionsinhibierung von Stahlbeton wären bei derartiger Phosphonsäureverbindungen Dosierungen im Bereich von ca. 0.2 bis 1.5 Massenprozenten (bezogen auf die Zementmasse) erforderlich. Eine so hohe Dosierung führt jedoch zu einer starken Reduktionen der Frühfestigkeitswerte der damit hergestellten zementbasierenden Produkte und ist daher vielfach unerwünscht.

Neben der korrosionsschützenden Behandlung von Frischbeton stellt sich in der Praxis häufig die Frage nach dem Schutz der Stahlarmierung in Altbeton, insbesondere im Falle von Sanierungen. Hierzu kann der Beton oberflächlich abgetragen oder abgestrahlt und die Stahlarmierung freigelegt werden. Die Stahlarmierung kann dann nach Entfernung von Korrosionsprodukten, durch beispielsweise Sandstrahlen, mit Korrosionsinhibitoren oder Korrosionsinhibitoren enthaltenden Produkten behandelt und schliesslich wieder mit Beton oder einem Reparaturmörtel überdeckt respektive reprofiliert werden. Diese Methode kommt vor allem in Fällen fortgeschrittener Korrosion des Armierungsstahls (bei zu grossem Querschnittsverlust ist dieser durch neuen Armierungsstahl zu ersetzen) und Betonabplatzungen, sowie bei Präsenz höherer Chloridkonzentrationen in der die Stahlarmierung überdeckenden Betonschicht zum Einsatz.

Es ist weiterhin bekannt, die Oberfläche von ausgehärtetem Stahlbeton mit einem penetrierenden Korrosionsinhibitor zu behandeln. Diese Technik ist beispielsweise in *"M. Haynes, B. Malric, Construction Repair, July*/*August 1997*" oder in US 5,071,579 offenbart. Hierzu wird eine Lösung des Korrosionsinhibitor mehrfach nacheinander auf die Beton-Oberfläche aufgetragen oder aufgesprüht, wobei der Korrosionsinhibitor die Oberfläche penetriert. Die weitere Penetration in das Innere bis zur Stahlarmierung wird üblicherweise durch das wiederholte Auftragen von Wasser auf die Oberfläche unterstützt. Es ist bekannt, Na₂PO₃F als penetrierenden Korrosionsinhibitor einzusetzen. US 5,071,579 offenbart ausserdem die kombinierte Verwendung von Na₂PO₃F zusammen mit einer Phosphonsäure der Formel RₙRₗN(CH₂PO₃H₂)₂₋ₙ (n=0 oder 1).

Diese Technik weist jedoch eine Reihe von Nachteilen auf: Um ihre Wirkung entfalten zu können, müssen die Korrosionsinhibitoren durch den Beton bis zur Stahleinlage hindurch eindringen. Je nach Dicke der Betonüberdeckung kann es sich dabei um eine Strecke von mehreren Zentimetern handeln und die Penetration dauert entsprechend lange. Natriumfluorophosphat wird ausserdem in stark alkalischem Milieu hydrolysiert und bildet mit im Porenwasser gelöstem Ca(OH)₂ schwerlösliche (in unhydrolysiertem Zustand: nur mässig lösliche) Calciumsalze, die nur schwerlich in den Beton hinein penetrieren können. Auch Phosphonsäuren können schwerlösliche Calciumsalze bilden. Ein erheblicher Teil der aufgebrachten Menge dieser Korrosionsinhibitoren erreicht somit die Stahleinlage überhaupt nicht und kann dem entsprechend auch keine korrosionsinhibierende Wirkung entfalten. Die Inhibitoren müssen daher in grossen Mengen eingesetzt werden. Dies ist unökonomisch und ausserdem wird der Beton dadurch mit unerwünschten Bestandteilen belastet.

### Darstellung der Erfindung

Aufgabe der vorliegenden Erfindung war es daher, hydraulisch abbindende Zusammensetzungen wie auch Oberflächenmodifizierungsmittel für Baustahl zur Verfügung zu stellen, die gut penetrierende, hoch wirksame Korrosionsinhibitoren für Stahl enthalten oder daraus bestehen, die keine unlöslichen oder schwerlöslichen Calcium-Salze bilden.

Überraschenderweise wurde gefunden, dass hydraulisch abbindende Zusammensetzungen gemäss Anspruch 1 und Oberflächenmodifizierungsmittel für Baustahl gemäss Anspruch 8 eine Lösung zur gestellten Aufgabe darstellen.

Es wurde überraschenderweise gefunden, dass die ,Alkoxy-Korrosionsinhibitoren', in Bezug auf Armierungsstahl respektive Baustahl ausgezeichnete Korrosionsschutzwirkung aufweisen, ohne jedoch einen wesentlichen Einfluss auf das Erhärtungsverhalten und die Verarbeitungseigenschaften von zementbasierenden Mörteln und Betonen zu haben.

### Weg zur Ausführung der Erfindung

Die vorliegende Erfindung betrifft einerseits eine hydraulisch abbindende Zusammensetzung, welche Alkoxygruppen umfassende Ester oder Estersalze von Phosphor-Sauerstoff-Säuren der allgemeinen Formel (I), (II), (III) oder (IV) enthält

R³-NR⁴ ₖ-[(CH₂)ₙ-PO(OR¹)(OR²)]ₘ (I)

[(R¹O)(R²O)OP-(CH₂)ₙ-]ₘ-NR⁴ ₖ-R⁵-NR⁴ ₖ-[-(CH₂)ₙ-PO(OR¹)(OR²)]ₘ (II)

R³-NR⁴ ₖ-[(CH₂)ₙ-PO(OR¹)(OM)]ₘ (III)

[(MO)(R¹O)OP-(CH₂)ₙ-]ₘ-NR⁴ ₖ-R⁵-NR⁴ ₖ-[-(CH₂)ₙ-PO(OR¹)(OM)]ₘ (IV)

wobei
■ n für eine ganze Zahl von 0 bis 10 steht,
■ m+k=2 ist und m = 1 oder 2 und k = 0 oder 1 sind,
■ es sich bei mindestens einem der Reste R¹, R² sowie gegebenenfalls R³ um eine Alkoxygruppe der allgemeinen Formel -[CH₂-CHR⁶-O]ₗR⁷ handelt, wobei I für 2 bis 30 steht und R⁶ und R⁷ jeweils für H oder CH₃ stehen,
und es sich bei den Resten R¹ und R², soweit es sich nicht um Alkoxygruppen handelt, um geradkettige oder verzweigte, optional substituierte C₁- bis C₆-Alkylgruppen handelt,
und es sich bei R³, soweit es sich nicht um eine Alkoxygruppe handelt, um eine geradkettige oder verzweigte, optional substituierte, C₁- bis C₂₀-Alkylgruppe oder Arylgruppe handelt,
■ R⁴ für H oder eine geradkettige oder verzweigte, optional substituierte C₁- bis C₆-Alkylgruppe steht,
■ R⁵ eine zweiwertige, verbrückende Gruppe bedeutet, und
■ M für mindestens ein Kation ausgewählt aus der Gruppe von Alkali-, Erdalkali- oder Ammoniumionen steht.

Hier und im Folgenden bezeichnet der Ausdruck ,Alkoxy-Korrosionsinhibitoren' oben beschriebene Alkoxygruppen umfassenden Ester oder Estersalze von Phosphor-Sauerstoff-Säuren der allgemeinen Formel (I), (II), (III) oder (IV).

Die Formeln der ,Alkoxy-Korrosionsinhibitoren' (I) bis (IV) zeigen , dass der Phosphor direkt an das Stickstoffatom (n=0) oder durch eine Alkylengruppe n>0) , davon getrennt vorliegt. Die Alkylengruppe ist durch den Index n beschrieben, wobei n eine ganze Zahl zwischen 1 und 10, insbesondere zwischen 1 und 3 darstellt. Bevorzugt ist n = 1 oder 0, insbesondere bevorzugt ist n = 1.

Der Index m steht für 1 oder 2 und der Index k für 0 oder 1, wobei die Summe von m+k=2 sind. Bevorzugt betragen m und k jeweils 1, d.h. es ist jeweils nur eine -(CH₂)ₙ-PO(OR¹)(OR²)-Gruppe oder -(CH₂)ₙ-PO(OR¹)(OM)-Gruppe direkt mit einem Stickstoffatom verknüpft

Bei mindestens einem der Reste R¹, R² sowie gegebenenfalls (d.h. für den Fall, dass es sich bei Verbindungen der Formel (I) oder (III) handelt) R³ handelt es sich um eine Alkoxygruppe. Geeignete Alkoxygruppen sind insbesondere Polyoxyethylen- oder Polyoxypropylengruppen der allgemeinen Formel -[CH₂-CHR⁶-O]ₗR⁷, wobei I für 2 bis 30 und R⁶ für H und/oder CH₃ steht. Bei R⁶ handelt es sich bevorzugt um H, d.h. bei der Alkoxygruppe handelt sich um eine Polyoxyethylengruppe. Bevorzugt steht I für 3 bis 20 und besonders bevorzugt für 5 bis 15. R⁷ steht für eine CH-Gruppe oder für H.

Es ist dem Fachmann bekannt, dass derartige Alkoxygruppen beispielsweise durch Oxalkylierung oder ausgehend von technischen Polyglykolen erhältlich sind. Die genannten Werte für I stehen somit für durchschnittliche Kettenlängen, wobei der Durchschnittswert selbstverständlich nicht eine natürliche Zahl sein muss, sondern auch eine beliebige rationale Zahl sein kann.

Die Reste R¹ und R² stellen, soweit es sich nicht um Alkoxygruppen handelt, um geradkettige oder verzweigte, optional substituierte C₁- bis C₆-Alkylgruppen dar. Beispielhaft handelt es sich hier um eine Methyl-, Ethyl-, n-Propyl-, Isopropyl-, n-Butyl-, n-Pentyl oder n-Hexylgruppe. Bevorzugt handelt es sich um eine Methyl- oder Ethylgruppe und ganz besonders bevorzugt um eine Ethylgruppe. Bei einer substituierten Alkylgruppe kann es sich insbesondere um eine 2-Methoxyethyl-Gruppe handeln.

Der Rest R³ stellt, soweit es sich nicht um eine Alkoxygruppe handelt, um eine geradkettige oder verzweigte, optional substituierte, C₁- bis C₂₀-Alkyl-gruppe oder Arylgruppe dar. Bevorzug sind C₁- bis C₂₀-Alkylgruppen. Beispiele geeigneter Gruppen umfassen Methyl-, Ethyl-, n-Propyl-, i-Propyl-, n-Butyl-, i-Butyl-, n-Pentyl-, n-Hexyl-, 2-Ethylhexyl-, n-Heptyl-, n-Octyl-, n-Nonyl-, n-Decyl- oder n-Dodecylgruppen. Besonders bevorzugte Gruppen umfassen n-Propyl-, n-Butyl-, n-Octyl- und 2-Ethylhexylgruppen. Bei einer substituierten Alkylgruppe kann es sich insbesondere um eine ω-Methoxyalkyl-Gruppe, z.B. Methoxyethyl-Gruppe handeln. Bei Arylgruppen kann es sich um reine Arylgruppen, wie um alkylsubstituierte Arylgruppen, beispielsweise um eine -CH₂C₅H₆-Gruppe handeln.

Der Rest R⁴, falls vorhanden, stellt ein H oder eine geradkettige oder verzweigte, optional substituierte C₁- bis C₆-Alkylgruppe dar. Besonders bevorzugt steht R⁴ für H oder Methyl. Bei einer substituierten Alkylgruppe kann es sich insbesondere um eine 2-Methoxyethyl-Gruppe handeln.

Bei den verbrückten Verbindungen der Formel (II) und (IV) ist kein R³ vorhanden, sondern statt dessen eine zweiwertige, verbrückende Gruppe R⁵, die bevorzugt mindestens 2 Kohlenstoffatome aufweist. Es kann sich dabei insbesondere um von aliphatischen, alicyclischen oder aromatischen Kohlenwasserstoffen abgeleitete Gruppen handeln. Beispiele umfassen 1,4-Xylylen-, 1,4-Cyclohexylylen- oder Ethyliden-Gruppen, die gegebenenfalls auch noch Heteroatome oder Substituenten aufweisen können. Bevorzugt handelt es sich bei der verbrückenden Gruppe um eine Alkylengruppe mit 2 bis 20 C-Atomen, bei der nicht benachbarte CH₂-Gruppen auch durch O oder N-Atome substituiert sein können. Beispiele umfassen -(CH₂)₂-, -(CH₂)₄-, -(CH₂)₆-, -(CH₂)₈-, -(CH₂)₂-O-(CH₂)₂-, -(CH₂)₂-O-(CH₂)₂-O-(CH₂)₂-, -(CH₂)₃-O-(CH₂)₂-O-(CH₂)₂-O-(CH₂)₃-, -(CH₂)₂-O-(CH₂)₂-O-(CH₂)₂-O-(CH₂)₂-, - (CH₂)₃-O-(CH₂)₄-O-(CH₂)₃-, -(CH₂)₂-O-[(CH₂)₂-O-]ⱼ(CH₂)₂-O-(CH₂)₂-, - (CH₂)₂-HN-(CH₂)₂- oder -(CH₂)₂-NR₆-(CH₂)₂- NR₆-(CH₂)₂-Gruppen, wobei j eine Zahl von 1 bis 10 ist. und R₆ Alkyl, -(CH₂)ₙ-PO(OR¹)(OR²) oder --(CH₂)ₙ-PO(OR¹)(OM) entspricht. Bevorzugt handelt es sich bei R⁵ um -(CH₂)₂-(CH₂)₄-, -(CH₂)₆-, -(CH₂)₃-O-(CH₂)₄-O-(CH₂)₃-, -(CH₂)₂-O-(CH₂)₂-O-(CH₂)₂oder-(CH₂)₂-O-(CH₂)₂-O-(CH₂)₂-O-(CH₂)₂- Gruppen.

Bei den Verbindungen der Formel (I) und (II) handelt es sich um Ester von Phosphor-Sauerstoff-Säuren, während es sich bei den Verbindungen der Formel (III) und (IV) um Estersalze von Phosphor-Sauerstoff-Säuren handelt. Diese Estersalze weisen eine Estergruppe pro Phosphoratom auf. Die Reste sind wie bereits zu wählen. Im Falle von Formel (IV) handelt es sich bei R¹ auf jeden Fall um eine Alkoxygruppe.

Die Estersalze weisen -(CH₂)ₙ-PO(OR¹)(OM) - Gruppen auf. Bei M handelt es sich um mindestens ein Kation ausgewählt aus der Gruppe von Alkali-, Erdalkali oder Ammoniumionen. Bei den Ammoniumionen kann es sich um NH₄⁺, (HOCH₂CH₂)₃NH⁺, (HOCH₂CH₂)₂NH₂⁺, HOCH₂CH₂NH₃⁺, HOCH₂CH₂N(CH₃)H₂⁺, (HOCH₂CH₂)₂N(CH₃)H⁺ oder, HOCH₂CH₂N(CH₃)₂H⁺ handeln, aber auch um Tetraalkylammoniumionen, wie beispielsweise Tetramethylammonium oder Tetraethylammonium. Bevorzugt sind Na⁺, K⁺, Mg⁺⁺, Ca⁺⁺, Ce⁺⁺⁺, Al⁺⁺⁺, Zn⁺⁺ oder NH₄⁺. Die obigen Formeln stellen der Einfachheit halber nur den Fall von einwertigen Kationen dar. Der Fachmann kann daraus jedoch leicht die korrekten Formeln für mehrwertige Kationen herleiten.

Unter den verschiedenen Kombinationsmöglichkeiten für die Reste R¹ bis R⁷, und M trifft der Fachmann je nach den gewünschten Eigenschaften und der vorgesehen Anwendung eine geeignete Auswahl.

Die Herstellung der "Alkoxy-Korrosionsinhibitoren' kann wie folgt erfolgen:

Die Diester der Phosphor-Sauerstoff-Säuren können beispielsweise ausgehend von kommerziell erhältlichen Phosphonsäureestern, wie beispielsweise Phosphonsäurediethylester hergestellt werden.

Der Begriff 'Diester' soll sich im Folgenden auf die Zahl der Estergruppen pro Phosphoratom beziehen und somit Verbindungen bezeichnen, bei denen alle im Molekül vorhandenen P-Atome jeweils zwei Estergruppen aufweisen. Entsprechend soll der Begriff ,Monoester, im Folgenden Verbindungen bezeichnen, bei denen jedes Phosphoratom eine Estergruppe und eine Gruppe -OH bzw. -O⁻ aufweist.

Ein alkoxylierter Diester kann daraus durch Umesterung erhalten werden, indem Phosphonsäurediethylester mit dem jeweils gewünschten Polyethylen- oder Polypropylenglykol bzw. den jeweiligen Monoethern umgesetzt wird. Die Umesterung kann beispielsweise durch Alkalimetalle katalysiert werden und freigesetztes Ethanol wird abdestilliert.

Es ist selbstverständlich auch möglich, von Phosphonsäure selbst auszugehen, und diese nach dem Fachmann prinzipiell bekannten Methoden zu oxalkylieren. In diesem Falle werden Alkoxygruppen erhalten, die noch eine endständige OH-Gruppe aufweisen.

Für n=0 können die erhaltenen Dialkoxyester mit dem gewünschten Amin wie beispielsweise Ethylhexylamin umgesetzt werden. Die Reaktion kann in prinzipiell bekannter Weise in CCl₄ sowie einem tertiären Amin als Katalysator durchführt werden. Durch Verwendung von Diaminen wie Ethylendiamin entstehen verbrückte Diester gemäss Formel (II). Durch Verwendung von Amino-Polyethylen- oder Polypropylenglykol entstehen Diester, die als R³ eine Alkoxygruppe aufweisen.

Diester mit n=1 lassen sich durch Aminomethylierung aus dem Phosphonsäurediethylester oder dem entsprechenden alkoxylierten Diester erhalten. Hierbei wird der Phosphonsäurediester mit Formaldehyd, dem gewünschten Amin sowie einer geeigneten Brønsted-Säure umgesetzt.

Diester mit n=2 lassen sich durch Addition von Aminen zu Vinylphosphonestern und für n>2 durch radikalische Addition von Phosphonsäurediestern an Doppelbindungen (z.B. zu Allylaminen für n=3) oder die Arbuzov-Reaktion mit Aminoalkylbromiden herstellen.

Die Estersalze werden bevorzugt durch alkalische Hydrolyse der Diester hergestellt, beispielsweise durch Erhitzen der Diester in wässriger NaOH auf Temperaturen von 60 bis 100°C für 2 bis 12 Stunden, wobei im wesentlichen nur eine Estergruppe pro Phosphoratom hydrolysiert wird. Die optimalen Bedingungen für die jeweils gewünschte Verbindung kann der Fachmann gegebenenfalls mit nur wenigen Versuchen ermitteln. Die Estersalze entstehen auch bei der Hydrolyse der Diester in Beton, wobei hier je nach der Art des Betons auch noch andere Kationen als Gegenionen auftreten können.

Hydraulisch abbindenden Bestandteile der hydraulisch abbindende Zusammensetzung sind solche anorganischen Substanzen, welche unter dem Einfluss von Wasser erhärten. Beispiele für solche hydraulisch abbindenden anorganische Substanzen sind beispielsweise Zemente, insbesondere Zemente gemäss Euronorm EN 197, in reiner Form oder als Abmischung mit latent hydraulischen Bindemitteln wie Flugasche, Hochofenschlacke, Oelschieferabbrand, natürliche Puzzolane oder Silicafume.

Die erfindungsgemässe hydraulisch abbindende Zusammensetzung kann je nach Verwendung weitere Bestandteile umfassen wie Zuschlagsstoffe, und Zusatzmittel.

Als Zusatzstoffe geeignet sind insbesondere inerte Füllstoffe, insbesondere Sand, Kies, Steine, Steinmehl.

Als Zusatzmittel können insbesondere Erhärtungs- und/oder Abbbinde-Beschleuniger, Erhärtungs- und/oder Abbbinde-Verzögerer, Betonfliessmittel, Korrosionsinhibitoren, Hydrophobierungsmittel resp. Betondichtungsmittel, Luftporenbildner, Thixotropiermittel Entschäumer, Farbstoffe, Tenside, Geruchsstoffe oder Biozide zum Einsatz kommen.

In einer Ausführungsform enthält die hydraulisch abbindende Zusammensetzung neben mindestens einem 'Alkoxy-Korrosionsinhibitor' mindestens einen Korrosionsinhibitor. Bevorzugte Korrosionsinhibitoren sind Aminoalkohole. Diese Aminoalkohole können auch als Aminoalkohol-Salze, gegebenenfalls in Mischung mit Aminoalkoholen, eingesetzt werden. Solche Aminoalkohol-Salze sind bevorzugt gut wasserlöslich. Als Aminoalkohol-Salze sind insbesondere die Salze von Aminoalkoholen und organischen Säuren, insbesondere der C₁-C₄-Carbonsäuren, C₁-C₄-Hydroxycarbonsäuren oder C₂-C₄-Dicarbonsäuren, geeignet. Besonders bevorzugt sind Korrosionsinhibitoren ausgewählt aus der Gruppe umfassend Monoethanolamin, Diethanolamin, Triethanolamin, N-Methylethanolamin, N,N-Dimethylethanolamin, N-Ethylethanolamin, N,N-Diethylethanolamin, N-Methyldiethanolamin und 2-Hydroxyethyl-ethylendiamin, sowie Salze organischer Säuren davon.

Ein Sonderfall der hydraulisch abbindenden Zusammensetzungen stellen nach Vermischung dieser mit Wasser die sogenannten Zementslurries dar. Diese Slurries bestehen im Wesentlichen aus Zementmilch und mindestens einem 'Alkoxy-Korrosionsinhibitor'. Sie eignen sich wie die erfindungsgemässen Oberflächenmodifizierungsmittel als Behandlungsmittel für Armierungsstahl, insbesondere vor dessen Einsatz in der Erstellung eines Stahlbetonbauwerks, als auch als Behandlungsmittel für freigelegten Armierungsstahl, insbesondere solche in Altbeton.

Die hydraulisch abbindende Zusammensetzung wird durch Mischen der Bestandteile hergestellt. Insbesondere werden die 'Alkoxy-Korrosionsinhibitoren' dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben.

Die vorliegende Erfindung betrifft andererseits ein Oberflächenmodifizierungsmittel für Baustahl, welches 'Alkoxy-Korrosionsinhibitoren', wie bereits definiert, enthält oder daraus besteht.

Die 'Alkoxy-Korrosionsinhibitoren' können direkt als Oberflächenmodifizierungsmittel für Baustahl verwendet werden.

Das erfindungsgemässe Oberflächenmodifizierungsmittel für Baustahl kann, je nach Verwendung, weitere Bestandteile umfassen wie Wasser, organische Lösungsmittel, Additive wie Entschäumer, Farbstoffe, Tenside, Emulgierhilfsmittel, Korrosionsinhibitoren, Stabilisatoren, Verdickungsmittel, Geruchsstoffe, Biozide. Es kann dabei in flüssiger Form vorliegen oder, mit geeigneten Hilfsstoffen versetzt, pasten- oder crèmeförmige Konsistenz aufweisen, was eine erhöhte Auftragsmenge pro Applikationsschritt ermöglicht.

In einer Ausführungsform enthält das Oberflächenmodifizierungsmittel neben mindestens einem _{'}Alkoxy-Korrosionsinhibitor' mindestens einen Korrosionsinhibitor. Bevorzugte Korrosionsinhibitoren sind Aminoalkohole. Diese Aminoalkohole können auch als Aminoalkohol-Salze, gegebenenfalls in Mischung mit Aminoalkoholen, eingesetzt werden. Solche Aminoalkohol-Salze sind bevorzugt gut wasserlöslich. Als Aminoalkohol-Salze sind insbesondere die Salze von Aminoalkoholen und organischen Säuren, insbesondere der C₁-C₄-Carbonsäuren, C₁-C₄-Hydroxycarbonsäuren oder C₂-C₄-Dicarbonsäuren, geeignet. Besonders bevorzugt sind Korrosionsinhibitoren ausgewählt aus der Gruppe umfassend Monoethanolamin, Diethanolamin, Triethanolamin, N-Methylethanolamin, N,N-Dimethylethanolamin, N-Ethylethanolamin, N,N-Diethylethanolamin, N-Methyldiethanolamin und 2-Hydroxyethyl-ethylendiamin, sowie Salze organischer Säuren davon.

Als Verdickungsmittel kommen insbesondere Thixotropiermittel auf organischer Basis wie Ricinusöl-Derivate, spezielle Polyamide, Polyharnstoffe und Polyurethane oder anorganischer Basis wie Kreiden, Kieselgure, pyrogene Kieselsäuren, Bentonite in Frage sowie organische Trägermaterialien zum Beispiel auf Silanbasis.

Des weiteren sind Kombinationen mit anderen Oberflächenmodifizierungsmitteln wie zum Beispiel Hydrophobierungsmitteln in flüssiger oder pastöser Konsistenz möglich.

Als eingesetzte Lösungsmittel geeignet sind Wasser und organische Lösungsmittel. Bei der Auswahl erfolgt nach technischen, bevorzugt aber auch nach ökologische Gesichtspunkten, wie beispielsweise die Humantoxizität, Wassergefährdungsklassen oder biologische Abbaubarkeit.

Als organische Lösungsmittel sind besonders geeignet Alkohole, vorzugsweise Methanol, Ethanol, Propanol, Isopropanol, höhere Alkohole wie Ethylenglykol, Glycerin, Polyetherpolyole wie Polyethylenglykole und Etheralkohole wie Butylglykol, Methoxypropanol, und Alkylpolyethylenglykole.

Insbesondere bevorzugt ist Wasser als Lösungsmittel. Weiterhin besonders bevorzugt sind Gemische von Wasser mit Alkoholen mit einem Wasseranteil von mehr als 50 Gew.-%, bevorzugt mehr als 65 Gew.-%, insbesondere mehr als 80 Gew.-%.

Je nach Formulierung und Anwendungszweck der Oberflächenmodifizierungsmittel sind die Lösungsmittel so auszuwählen, dass das oder die eingesetzten 'Alkoxy-Korrosionsinhibitoren' löslich, teilweise löslich oder nicht löslich im Lösungsmittel oder Lösungsmittelgemisch ist. Teilweise lösliche oder insbesondere nicht lösliche Lösungsmittel für 'Alkoxy-Korrosionsinhibitoren' werden vorzugsweise dann verwendet, wenn das Oberflächenmodifizierungsmittel in Form von Emulsionen oder Mikroemulsionen verwendet werden soll oder wenn damit eine Erhöhung des Penetrationsverhaltens erzielt werden kann.

Bevorzugt handelt es sich beim Oberflächenmodifizierungsmittel für Baustahl um eine wässrige oder um eine weitgehend wasserbasierende Lösung von mindestens einem 'Alkoxy-Korrosionsinhibitor', welche besonders bevorzugt einen pH-Wert zwischen 7 und 13 aufweist.

Die eingesetzte Konzentration der Summe aller 'Alkoxy-Korrosionsinhibitoren' im Oberflächenmodifizierungsmittel wird vom Fachmann je nach Anwendung und Anforderungen gewählt. Typischerweise liegt der Anteil der Summe aller 'Alkoxy-Korrosionsinhibitoren' im Oberflächenmodifizierungsmittel zwischen 100 und 5 Gew.-%, insbesondere zwischen 100 und 10 Gew.-%. Ein für übliche Anwendungen sehr geeigneter Konzentrationsbereich der Summe aller 'Alkoxy-Korrosionsinhibitoren' im eingesetzten Oberflächenmodifizierungsmittel liegt zwischen 80 und 10 Gew.-%., insbesondere zwischen 50 und 10 Gew.-%.

Falls zusätzliche Bestandteile im Oberflächenmodifizierungsmittel vorhanden sind, werden diese mit den 'Alkoxy-Korrosionsinhibitoren' vermischt. Je nach Art und Konsistenz des Oberflächenmodifizierungsmittels kann die Reihenfolge im Zumischungsprozess von Bedeutung sein. Es ist auch möglich, das Oberflächenmodifizierungsmittel in Form eines Konzentrats herzustellen.

Das Oberflächenmodifizierungsmittel kann nach der Konfektion direkt zum Einsatz gelangen oder es kann unmittelbar vor der Applikation nochmals modifiziert werden. Eine besonders wichtige Modifikation stellt ein Verdünnen mit einem Lösungsmittel, insbesondere Wasser, dar.

Die erfindungsgemässe hydraulisch abbindende Zusammensetzung sowie das erfindungsgemässe Oberflächenmodifizierungsmittel finden Verwendung zum Schutz von Stahlbeton.

Die korrosionsinhibierende Wirkung der 'Alkoxy-Korrosionsinhibitoren' konnte mit Hilfe elektrochemischer Messungen gezeigt werden. Es konnte gezeigt werden, dass mit 'Alkoxy-Korrosionsinhibitoren' eine signifikante Erhöhung des Polarisationswiderstandes erreicht werden kann, dass sie aber im Gegensatz zu bekannten Korrosionsinhibitoren wie beispielsweise Nitriten, Vanadaten und Molybdaten, nur einen kleinen Anstieg (ΔE) des Ruhepotentials im Vergleich zur Nullprobe aufweisen, so dass die Gefahr der Makroelementbildung reduziert ist. Deshalb sind 'Alkoxy-Korrosionsinhibitoren' nicht nur bezüglich ihrer Diffusionsfähigkeit in Beton, sondern auch infolge ihrer besseren Korrosionsschutzwirkung den erwähnten Korrosionsinhibitoren deutlich überlegen.

Die erfindungsgemässe hydraulisch abbindende Zusammensetzung kann unterschiedlich verwendet werden.

Einerseits können mittels der Zusammensetzung stahlenthaltende Bauwerke hergestellt. Hierfür wird die Zusammensetzung mit Wasser vermischt. Anschliessend wird mit dieser Masse der Stahl überdeckt oder umhüllt und erhärtet. Ein besonders bevorzugtes Beispiel hierfür sind die Erstellung von Stahlbetonbauwerken, insbesondere von Gebäude, Tunnels und Brücken.

Andererseits kann die erfindungsgemässe hydraulisch abbindende Zusammensetzung einen Mörtel, insbesondere auch polymervergütete Reparaturmörtel, kunstharzvergütete Mörtel oder eine mit dem ,Alkoxy-Korrosionsinhibitor' versetzte Schlämme aus hydraulisch abbindendem Material und Wasser darstellen. Hierbei wird diese Zusammensetzung nach Vermischung mit Wasser auf freigelegten Armierungsstahl appliziert. Der Armierungsstahl kann, wie im Folgenden erwähnt, vorgängig bereits mit einem erfindungsgemässen Oberflächenmodifizierungsmittel behandelt worden sein. Der mit Wasser vermischte Mörtel überschichtet oder umhüllt der Armierungsstahl. Nach der Applikation des 'Alkoxy-Korrosionsinhibitor' enthaltenden Mörtels erhärtet dieser. Diese Anwendung stellt ein Sanierungsverfahren für erhärteten Beton, insbesondere Altbeton, dar. Es kommt vor allem in Fällen fortgeschrittener Korrosion des Armierungsstahls (bei zu grossem Querschnittsverlust ist dieser durch neuen Armierungsstahl zu ersetzen) und Betonabplatzungen, sowie bei Präsenz höherer Chloridkonzentrationen in der die Stahlarmierung überdeckenden Betonschicht zum Einsatz.

Die hydraulisch abbindende Zusammensetzung wird üblicherweise unter Ausschluss von Feuchtigkeit als Pulver gelagert und gelangt unmittelbar vor der Anwendung mit Wasser in Berührung. Die Menge des eingesetzten Wassers ist für die Endeigenschaften der ausgehärteten Zusammensetzung sehr wichtig. Im Falle von Zement verwendet der Fachmann hierfür den sogenannten Wasser/Zement-Wert. Die Vermischung mit Wasser geschieht manuell oder vorteilhaft maschinell. Je nach Art der Bestandteile der Zusammensetzung weist die mit Wasser vermischte Zusammensetzung unterschiedliche Beschaffenheit auf. Beispielsweise sind von streichbaren Zementslurries über pumpbare Betone bis hin zu hochstandfesten Reparaturmörteln jegliche Zwischenstufen der Konsistenz realisierbar. Die Zusammensetzungen weisen unmittelbar nach der Vermischung mit Wasser keine wesentlichen mechanischen Festigkeiten auf. Die Systeme erhärten jedoch durch das hydraulische Abbinden zu hochfesten Materialien.

Das erfindungsgemässe Oberflächenmodifizierungsmittel kann unterschiedlich verwendet werden. Einerseits kann das Oberflächenmodifizierungsmittel auf die Stahloberfläche aufgetragen werden. Anschliessend an die Oberflächenmodifizierung wird der so behandelte Stahl mit einer hydraulisch abbindenden Zusammensetzung nach deren Vermischung mit Wasser überdeckt oder umhüllt.

In einer Ausführungsform der Erfindung wird das Oberflächenmodifizierungsmittel auf Armierungsstahl nach der Produktion des Stahls appliziert, wodurch der Armierungsstahl während Lagerung und Transport, zumindest temporär, vor Korrosion geschützt wird, bevor er mit frischem Beton zusammengebracht wird und unter Bildung eines Stahlbetonbauwerks erhärtet.

Andererseits kann das Oberflächenmodifizierungsmittel für Baustahl auf die Oberfläche von bereits erhärteten Stahlbeton, insbesondere Altbeton, aufgetragen werden. Hierbei penetriert das Oberflächenmodifizierungsmittel für Baustahl, oder zumindest die darin enthaltenen korrosionsschutzaktiven Bestandteile, in den Beton hinein und gelangt schliesslich zum Armierungsstahl. Eine solche Anwendung stellt ein Verfahren zur Sanierung von Stahlbeton dar.

Ein weitere Möglichkeit der Anwendung des Oberflächenmodifizierungsmittels für Baustahl stellt dessen Applikation auf freigelegten Armierungsstahl dar. Anschliessend kann der so behandelte Armierungsstahl mit einem üblichen Reparaturmörtel oder üblichem Beton überschichtet werden oder aber es kann von einer erfindungsgemässen hydraulisch abbindenden Zusammensetzung überschichtet werden.

Die Applikation des Oberflächenmodifizierungsmittels für Baustahl kann unterschiedlich beispielsweise durch Lackierung, Sprühen, insbesondere Airless-Sprühen, Tauchen, Fluten, Giessen, Auftrag mittels Pinsel, Farbroller, Tuch oder Schwamm, erfolgen. Die Applikation wird vorteilhaft mehrmals nacheinander wiederholt. Die Penetration des Oberflächenmodifizierungsmittels, beziehungsweise des 'Alkoxy-Korrosionsinhibitors' von der Oberfläche des Betons zum Baustahl kann, wie bereits beschieben, durch in der Formulierung vorhandenen Zusätze verstärkt werden. Andererseits spielt die Feuchtigkeit des Betons eine wichtige Rolle. Trockener Beton saugt sehr viel stärker das Oberflächenmodifizierungsmittel auf als feuchtigkeitsgesättigter Beton. Weiterhin kann es vorteilhaft sein, nach der letzten Applikation die Betonoberflächen mit Wasser feucht zu halten, um die Penetration mittels durch Kapillarkräfte aufgenommenes Wasser zu unterstützen.

Die vorteilhafte Wirkung der erfindungsgemässen hydraulisch abbindenden Zusammensetzung und des Oberflächenmodifizierungsmittels wird dadurch erklärt, dass die in den Beton eingebrachten Diester mit den im Beton vorhandenen Alkalien langsam zu Monoestersalzen hydrolysieren. Diese haben eine bessere korrosionsinhibierende Wirkung als die Diester selbst. Die erfindungsgemässen Verfahren haben den grossen Vorteil, dass auch solche Verbindungen eingesetzt werden können, bei denen die Calcium-Salze der Monoestersalze schwerer löslich sind und somit langsamer als die Diester diffundieren. Der Monoester mit der besseren Korrosionsschutzwirkung wird quasi als Diester maskiert und penetriert in den Beton hinein. Erst im Inneren des Betons wird durch Hydrolyse nach und nach die besser wirkende korrosionsinhibierende Verbindung freigesetzt.

### Beispiele

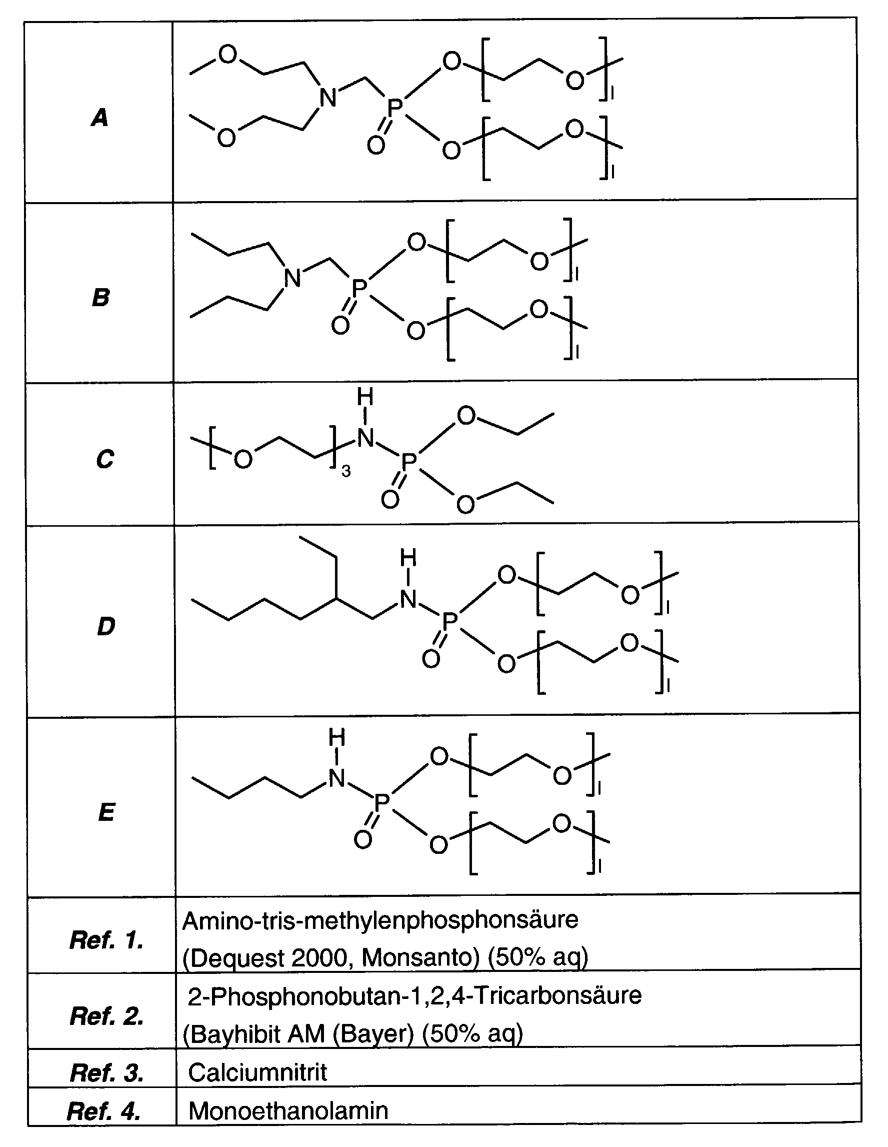

Die Herstellung der Korrosionsinhibitoren ***A, B, C, D*** und ***E*** erfolgt wie folgt:

### Beispiel 1: Umesterung von Diethylphosphit zu Di(Methylpolyethylen-glycoxy)-phosphit

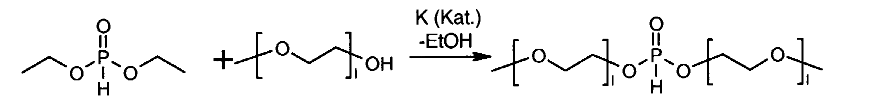

Diethylphosphit (12,8g, 0,093mol) und Pluriol® A275E (50g, 0,186mol, erhältlich von BASF AG) wurden zusammen in einen 500mL-Kolben vorgelegt. Nach der Zugabe von Kalium (20mg, 0,5mmol) als Katalysator wurde die Reaktion bis 170°C erwärmt und bei normalem Druck wurde EtOH (3,4g) abdestilliert. Das restliche EtOH wurde bei 20mmHg verdampft. Die Ausbeute betrug 95-98%.

### Beispiel 2: Herstellung von 2-[2-(2-Methoxy-ethoxy)-ethoxy]-ethylamine

200 g Triethylenglykolmonomethylether (Fluka) wurde mit einem Katalysator und 700 ml THF und in einem 2.5 l Rührautoklaven vorgelegt. Danach wurde mit Stickstoff inertisiert und anschliessend 500 ml Ammoniak bei Raumtemperatur zugegeben. Anschliessend wurde Wasserstoff bei Raumtemperatur zugegeben und unter Rühren auf 200 °C geheizt. Beim Erreichen von 200 °C wurde der Druck durch weitere Wasserstoffzugabe erhöht. Anschliessend wurde während 12 Stunden bei 200 °C gerührt und abgekühlt auf Raumtemperatur. Nach einer Filtration, Zugabe von Kieselgel und nochmaligem Filtrieren wurde die klare farblose Lösung am Rotationsverdampfer eingeengt. Das Amin wurde ohne weitere Reinigung verwendet.

### Herstellung von A und B

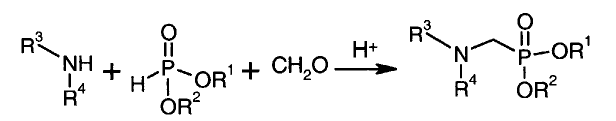

Das Di(Methylpolyethylenglycoxy)phosphit aus *Beispiel 1* (0.1 mol) wurde in 1 Stunde zu einer Mischung des jeweiligen Amins (0.1 mol), Formaldehyd. (36,5%ige Lösung, 0.1 mol) und o-Phosphorsäure (85%-ig, 5 Gew.-%) unter Kühlung bei ∼11 °C zugetropft. Danach wurde die Reaktionsmischung auf 90 °C erhitzt und 3 h bei dieser Temperatur gehalten.

### Herstellung von C, D und E

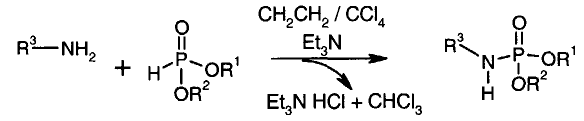

Das Di(Methylpolyethylenglycoxy)phosphit aus *Beispiel 1* (0.092mol), respektive Diethyl-phosphit (0.092mol) im Falle der Herstellung von C, wurden in einer Mischung 1:1 CCl₄/CH₂Cl₂ (185mL) gelöst und das jeweilige Amin *(Beispiel 2* oder kommerziell erhältlich) (0.092mol) hinzugefügt. Schliesslich wurde Triethylamin (0.092mol) zugetropft. Das weisse Triethylammoniumhydrochlorid-Pulver wurde filtriert und das Lösungsmittel abdestilliert. Es wurden die gewünschten Substanzen als transparente Flüssigkeit in einer Ausbeute von ca. 76 % erhalten.

### Zusammensetzung 'Testmörtel 0-3 mm':

880 g CEM I 42.5
320 g Kalksteinfiller
180 g Quarzsand Fraktion 0.08-0.2 mm
280 g Quarzsand Fraktion 0.1-0.5 mm
370 g Quarzsand Fraktion 0.3-0.8 mm
440 g Quarzsand Fraktion 0.8-1.2 mm
630 g Quarzsand Fraktion 1.5-2.0 mm
800 g Quarzsand Fraktion 2.0-3.0 mm

### Zusammensetzung 'Testbeton 0-32 mm':

7.50 kg CEM I 42.5 (entsprechend 300 kg Zement pro m³ Beton)
2.50 kg Kalksteinfiller
17.50 kg Fluss-Sand 0-4 mm
7.50 kg Fluss-Sand 4-8 mm
7.50 kg Fluss-Sand 8-16 mm
15.00 kg Fluss-Sand 16-32 mm

### Zusammensetzung 'Testbeton 0-16 mm':

11.25 kg CEM I 42.5 (entsprechend 300 kg Zement pro m³ Beton)
0.75 kg Kalksteinfiller
39.00 kg Fluss-Sand 0-4 mm
11.25 kg Fluss-Sand 4-8 mm
24.00 kg Fluss-Sand 8-16 mm

### Prüfmethoden

Die Mörtel und Betone wurden gem. EN 480-1 gemischt. Die Bestimmung der Kennwerte im Mörtel (Ausbreitmass, Luftporengehalt, Festigkeiten) wurden nach DIN 18555 durchgeführt, die Bestimmung der Betondaten im Einklang mit DIN 1048.

### Vergleich 1: Frischmörteleigenschaften und Festigkeitsentwicklung von Mörtel bei Zusatz verschiedener Korrosionsinhibitoren:

### Prüfbedingungen:

- CEM I 42.5
- Testmörtelmischung 0-3 mm
- Wasser/Zement-Wert: 0.545
- Verarbeitungstemperatur 20°C
- Dosierungsangaben in Massenprozenten Korrosionsinhibitor, bezogen auf Zementmasse
- Nachbehandlung des Mörtels: Lagerung im Klimaraum bei 20°C und 95 % relativer Luftfeuchtigkeit.

Die Versuchsergebnisse aus Tabelle 1 zeigen, dass die Vergleichskorrosionsinhibitoren ***Ref. 1,*** sowie ***Ref. 2.,*** im Gegensatz zu den 'Alkoxy-Korrosionsinhibitoren' ***A*** und ***B,*** insbesondere bei höheren Inhibitorenkonzentrationen, bei gleichen Wasser-Zement-Werten die Frühdruckfestigkeitswerte, wie auch die Ausbreitmasse von Mörtel stark negativ beeinflussen.

**Tabelle 1**

| Vergleich Frischmörteleigenschaften und Festigkeitsentwicklung von Mörtel - Einfluss des Inhibitors und -Konzentrationen. | | | | | | | |
|---|---|---|---|---|---|---|---|
| Korrosionsinhibitor | | Ausbreitmass [mm] | | Luftgehalt [%] | | Druckfestigkeit [MPa] | |
| | Dosierung [Gew.-%] | 3 Min. | 30 Min. | 3 Min. | 30 Min. | 1 Tag | 7 Tage |
| Kein | 0.00 | 183 | 173 | 4.6 | 4.9 | 13.8 | 48.4 |
| A | 1.00 | 184 | 172 | 5.4 | 5.8 | 12.9 | 46.7 |
| ***B*** | 1.00 | 187 | 179 | 5.4 | 5.8 | 12.4 | 44.5 |
| ***Ref. 1.*** | 0.10 | 207 | 170 | 4.0 | 4.0 | 2.2 | n.b.** |
| ***Ref. 1.*** | 0.20 | 232 | 188 | 3.2 | 4.2 | < 0.1* | n.b.** |
| ***Ref. 1.*** | 0.50 | 230 | 213 | 3.9 | 5.0 | < 0.1* | 0.4 |
| ***Ref. 2.*** | 0.10 | 212 | 187 | 3.6 | 4.0 | < 0.1* | n.b.** |
| ***Ref. 2.*** | 0.20 | 226 | 192 | 4.0 | 4.9 | < 0.1 | n.b.** |
| ***Ref. 2.*** | 0.50 | 222 | 213 | 3.8 | 4.4 | < 0.1* | 0.5 |

| | | | | | | | |
|---|---|---|---|---|---|---|---|
| ^{*}Mörtelproben zum Zeitpunkt der Prüfung noch weich (Druckfestigkeitswerte < 0.1 MPa). | | | | | | | |
| ^{**}n.b. = nicht bestimmt. | | | | | | | |

### Vergleich 2: Frischmörteleigenschaften und Festigkeitsentwicklung von Mörtel bei Zusatz verschiedener Korrosionsinhibitoren und Fliessmittel:

### Prüfbedingungen:

- Testmörtelmischung 0-3 mm
- Wasser/Zement: 0.430
- Verarbeitungstemperatur 20°C
- Zusatz von 1.00 % eines Fliessmittels auf Basis sulfonierter Naphthalin-Formaldehyd-Kondensate
- Zusatz bei ***D*** und ***E*** von 0.3 Gew.-% Entschäumer, bezogen auf die Masse Korrosionsinhibitor, bestehend aus 1 Massenteil Tributylphosphat und 2 Massenteilen eines mineralölbasierenden Entschäumers
- Dosierungsangaben in Massenprozenten Korrosionsinhibitor, bezogen auf Zementmasse
- Nachbehandlung des Mörtels: Lagerung im Klimaraum bei 20°C und 95 % relativer Luftfeuchtigkeit.

**Tabelle 2**

| Vergleich Frischmörteleigenschaften und Festigkeitsentwicklung von Mörtel bei Zusatz von Fliessmittel- Einfluss des Inhibitors und - Konzentrationen. | | | | | | | | |
|---|---|---|---|---|---|---|---|---|
| Korrosionsinhibitor | | Ausbreitmass _{[mm]} | | Luftgehalt _{[%]} | | Druckfestigkeit _{[MPa]} | | |
| | Dosierung [Gew.-%] | 3 Min. | 30 Min. | 3 Min. | 30 Min. | 1 Tag | 3 Tage | 28Tage |
| Kein | 0.00 | 188 | 157 | 4.3 | 4.5 | 33.1 | 61.0 | 67.7 |
| ***A*** | 0.50 | 183 | 157 | 5.3 | 5.7 | 32.1 | 58.9 | 66.9 |
| ***B*** | 0.50 | 176 | 155 | 5.4 | 5.6 | 30.7 | 57.3 | 66.2 |
| ***C*** | 0.50 | 192 | 160 | 4.2 | 4.6 | 29.6 | 55.6 | 64.5 |
| ***D*** | 0.50 | 184 | 157 | 4.5 | 5.0 | 30.7 | 57.4 | 65.4 |
| ***E*** | 0.50 | 193 | 154 | 4.7 | 6.2 | 29.3 | 56.7 | 65.0 |
| ***A*** | 1.00 | 180 | 154 | 5.6 | 6.0 | 30.2 | 57.4 | 65.3 |
| ***B*** | 1.00 | 175 | 149 | 5.3 | 5.8 | 28.7 | 56.5 | 64.1 |
| ***C*** | 1.00 | 194 | 162 | 4.8 | 5.2 | 27.9 | 54.4 | 63.8 |
| ***D*** | 1.00 | 192 | 154 | 4.7 | 5.1 | 28.1 | 56.4 | 64.1 |
| ***E*** | 1.00 | 183 | 153 | 5.0 | 5.5 | 28.6 | 56.1 | 62.5 |

Die Ergebnisse aus Tabelle 2 für mit Fliessmittel modifizierten Testmörtel zeigen auf, dass die _{'}Alkoxy-Korrosionsinhibitoren' ***A, B, C, D*** und ***E*** enthaltenden Testmörtel im Vergleich zum Testmörtel ohne Korrosionsinhibitoren auch bei höheren Konzentrationen keine merklichen Verschlechterungen in Bezug auf Verarbeitungseigenschaften oder Druckfestigkeiten aufweisen.

### Vergleich 3: Frischmörteleigenschaften und Festigkeitsentwicklung von Mörtel bei Zusatz Korrosionsinhibitoren kombiniert mit Luftporenbildner:

### Prüfbedingungen:

- Testmörtelmischung 0-3 mm
- Wasser/Zement: 0.545
- Verarbeitungstemperatur 20°C
- Dosierungsangaben in Massenprozenten Korrosionsinhibitor oder Luftporenbildner, bezogen auf Zementmasse 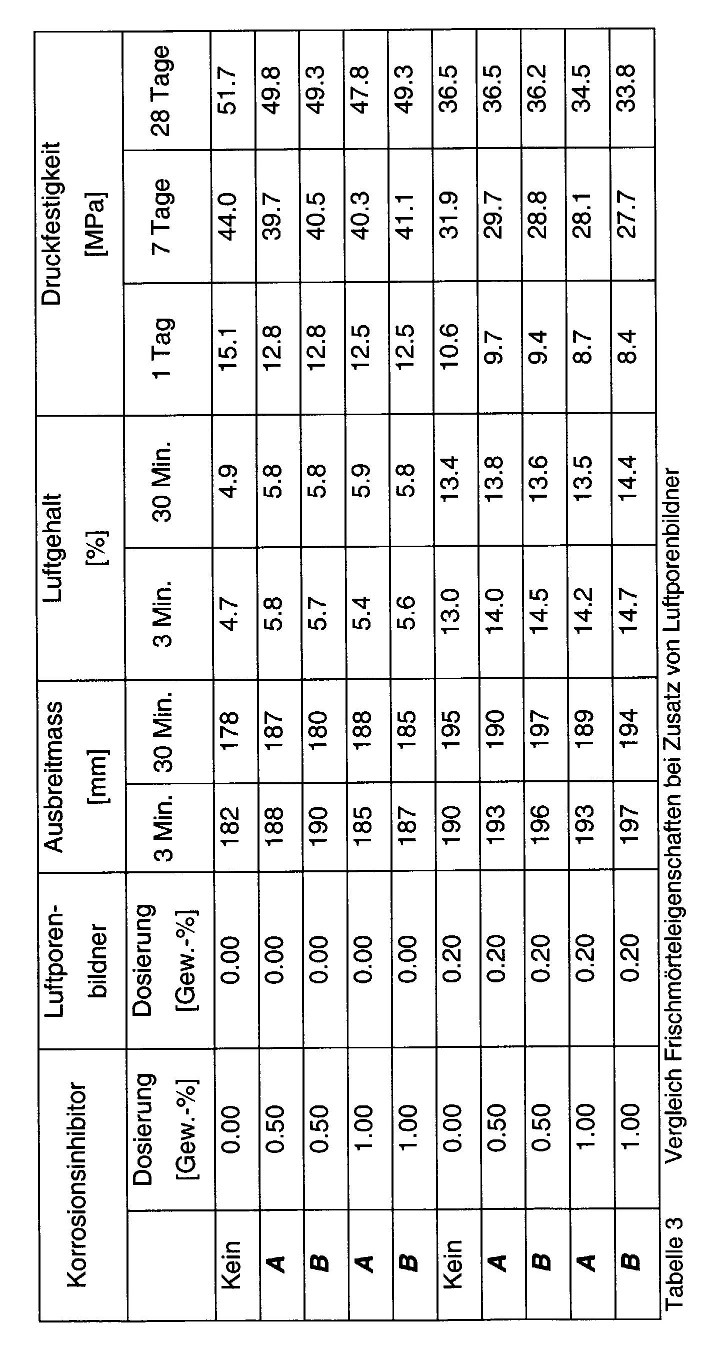
- Nachbehandlung des Mörtels: Lagerung im Klimaraum bei 20°C und 95 % relativer Luftfeuchtigkeit
- Zusatz eines Luftporenbildners auf Basis natürlicher Wurzelharzen

Tabelle 3 belegt anhand der Resultate der Korrosionsinhibitoren ***A*** und ***B*** im Vergleich mit der Probe ohne 'Alkoxy-Korrosionsinhibitoren', dass ,Alkoxy-Korrosionsinhibitoren' die Wirkung der Luftporenbildner nicht negativ beeinflussen.

### Vergleich 4: Frischmörteleigenschaften von Mörtel bei Zusatz verschiedener Korrosionsinhibitoren und Luftporenbildner und Fliessmittel:

### Prüfbedingungen:

- Testmörtelmischung 0-3 mm
- Wasser/Zement: 0.430
- Verarbeitungstemperatur 20°C
- Zusatz von 1.00 % eines Fliessmittels auf Basis sulfonierter Naphthalin-Formaldehyd-Kondensate
- Zusatz eines Luftporenbildners auf Basis natürlicher Wurzelharzen
- Zusatz bei ***D*** und ***E*** von 0.3 Gew.-% Entschäumer, bezogen auf die Masse Korrosionsinhibitor, bestehend aus 1 Massenteil Tributylphosphat und 2 Massenteilen eines mineralölbasierenden Entschäumers.
- Dosierungsangaben in Massenprozenten Korrosionsinhibitor oder Luftporenbildner, bezogen auf Zementmasse
- Nachbehandlung des Mörtels: Lagerung im Klimaraum bei 20°C und 95 % relativer Luftfeuchte.

**Tabelle 4**

| Vergleich Frischmörteleigenschaften bei Zusatz von Fliessmittel und Luftporenbildner. | | | | | | |
|---|---|---|---|---|---|---|
| Korrosionsinhibitor | | Luftporenbildner | Ausbreitmass [mm] | | Luftgehalt [%] | |
| | Dosierung [Gew.-%] | Dosierung [Gew.-%] | 3 Min. | 30 Min. | 3 Min. | 30 Min. |
| Kein | 0.00 | 0.40 | 190 | 160 | 7.5 | 7.0 |
| ***D*** | 0.50 | 0.40 | 204 | 170 | 7.8 | 8.1 |
| ***D*** | 0.50 | 0.60 | 200 | 185 | 8.9 | 9.3 |
| ***D*** | 0.50 | 0.70 | 210 | 198 | 10.5 | 11.5 |
| ***E*** | 0.50 | 0.40 | 203 | 168 | 7.2 | 7.3 |
| ***E*** | 0.50 | 0.60 | 209 | 171 | 9.1 | 9.2 |
| ***E*** | 0.50 | 0.70 | 216 | 190 | 10.2 | 11.0 |

Die Ergebnisse aus Tabelle 4 für mit Fliessmittel und Luftporenbildner modifizierten Testmörtel zeigen auf, dass die 'Alkoxy-Korrosionsinhibitoren' ***D*** und ***E*** enthaltenden Testmörtel im Vergleich zum Testmörtel ohne Korrosionsinhibitoren auch bei höheren Konzentrationen von Luftporenbildner keine merklichen Verschlechterungen in Bezug auf Verarbeitungseigenschaften aufweisen.

### Vergleich 5: Frischbetoneigenschaften und Festigkeitsentwicklung von Beton bei Zusatz verschiedener Korrosionsinhibitoren:

### Prüfbedingungen:

- Testbetonmischung 0-32 mm
- Wasser/Zement: 0.540
- Verarbeitungstemperatur 20°C
- Dosierungsangaben in Massenprozenten Korrosionsinhibitor, bezogen auf Zementmasse
- Nachbehandlung des Betons: Lagerung im Klimaraum bei 20°C und 95 % relativer Luftfeuchtigkeit
- Druckfestigkeitsprüfung an Würfeln mit Kantenlänge von 120 mm.

| Tabelle 5 Vergleich Frischbetoneigenschaften | | | | | | | | |
|---|---|---|---|---|---|---|---|---|
| Korrosionsinhibitor | | Ausbreitmass [cm] | | Luftgehalt [%] | Druckfestigkeit [MPa] | | | |
| | Dosierung [Gew.-%] | 3 Min. | 30 Min. | 3 Min. | 1 Tag | 3 Tage | 7 Tage | 28 Tage |
| Kein | 0.00 | 42 | 35 | 1.5 | 18.3 | 32.5 | | |
| ***A*** | 0.50 | 43 | 35 | 1.8 | 17.1 | 31.4 | | |
| ***A*** | 1.00 | 42 | 34 | 2.0 | 16.2 | 28.7 | | |
| ***B*** | 0.50 | 44 | 36 | 2.1 | 16.7 | 30.3 | | |
| ***B*** | 1.00 | 43 | 37 | 2.0 | 15.9 | 27.9 | | |

Die Ergebnisse aus Tabelle 5 zeigen, dass 'Alkoxy-Korrosionsinhibitoren' ***A*** und ***B*** enthaltenden Testbetone im Vergleich zum Testbeton ohne Korrosionsinhibitoren keine signifikante Unterschiede weder in der Verarbeitbarkeit des Betons noch im Luftgehalt festgestellt werden kann.

### Vergleich 6: Elektrochemische Messungen: Vergleich verschiedener Korrosionsinhibitoren:

Es wurde der lineare Polarisationswiderstandes an Lösungen von Korrosionsinhibitoren in Kontakt mit Baustahl ST-37 mittels Potentiostat-Galvanostat Versastat II von Perkin-Elmer gemessen. Als Referenzelektrode diente Ag/AgCl (3M KCI-Lsg., E = 197 mV). Als Gegenelektrode diente ein Platinnetz oder Platinspirale mit einer Fläche 3 cm² und einem Abstand von der Arbeitselektrode von 8-12 cm (Anordnung parallel zur Arbeitselektrode). Als Arbeitselektrode diente das zu untersuchende Prüfblech. Das Prüfblech (2 x 5 cm², Stahl 1.0037) wurde der folgenden Vorbehandlung unterzogen
(A) kathodische alkalische Entfettung
(B) Tauchen in Wasser
(C) Kathodische Entrostung in 10% Diammoniumcitrat
(D)Tauchen in Wasser

In der Messzelle stand eine kreisförmige Fläche von 1 cm² des Prüfblechs in Kontakt mit dem Testelektrolyten bestehend aus 0.5 Massenprozenten des jeweiligen Korrosionsinhibitors in 0.03 molarer Natriumchloridlösung.

Die lineare Polarisation wurde in einem Bereich von 20 mV um das Ruhepotential mit einer Messgeschwindigkeit von 0.166 mV/s gemessen.

**Tabelle 6**

| Elektrochemische Messungen. | | |
|---|---|---|
| Korrosionsinhibitor | Ruhepotential [mV] | Polarisationswiderstand [kΩ] |
| Kein | -584 bis -540 | 1 bis 2 |
| ***C*** | -453 bis -443 | 3 bis 4 |
| ***D*** | -328 bis -340 | 3 bis 4 |
| ***E*** | -333 bis -349 | 4 bis 6 |
| ***Ref. 3.*** | -3 bis -27 | 5 bis 7 |

Die Messewerte der elektrochemischen Messungen in Tabelle 6 zeigen, dass zwar Calciumnitrit (***Ref. 3*.**) als bekannter Korrosionsinhibitor für Baustahl am Anstieg des Polarisationswiderstandes und am Anstieg des Ruhepotentials deutlich die Wirkung als Korrosionsinhibitor wirkt, dass ein sehr starke Anstieg (ΔE) des Ruhepotentials im Vergleich zur Nullprobe von mehr als 500 mV erfolgt, was bekanntermassen ein grosser Nachteil der bekannten Korrosionsinhibitoren darstellt. Dies kann nämlich zur Bildung von Makroelementen führen. Bei den 'Alkoxy-Korrosionsinhibitoren' **C, *D*** und ***E*** wird ebenfalls eine signifikante Erhöhung des Polarisationswiderstandes erreicht, und damit eine deutliche Wirkung als Korrosionsinhibitor bewiesen, gleichzeitig steigt das Ruhepotential aber nur um 100 bis 200 mV. Bei derartig kleinen Potentialdifferenzen ist die Gefahr der Makroelementbildung deutlich reduziert. Deshalb kann mit diesen Messungen gezeigt werden, dass ,Alkoxy-Korrosionsinhibitoren' den bekannten Korrosionsinhibitoren überlegen ist.

### Vergleich 7: Eindringen von oberflächenapplizierten Korrosionsinhibitoren in erhärtete Betonproben:

Zur Prüfung des Penetrationsverhaltens der ,Alkoxy-Korrosionsinhibitoren' wurden Betonplättchen von 75 mm Länge, 20 mm Breite und 4 mm Dicke verwendet. Die Betonplättchen wurden -ähnlich der Dünnschichtchromatographie- senkrecht in eine Testlösung aus jeweils 10 Gew.-% der Korrosionsinhibitoren in Wasser gestellt, so dass sie am unteren Rand etwa 1 cm in die Lösung eintauchen. Um das Verdunsten der Testlösung zu verhindern, wurden die Tests in einem geschlossenen Gefäss, z.B. einem Schnappdeckelgläschen geeigneter Grösse, durchgeführt. Nach 1 Tag ist die Testlösung bis zum oberen Rand des Plättchens hochgewandert. Zur Analyse wurde nach einem Tag aus dem oberen Drittel des Betonplättchens eine Probe herausgebrochen, gemahlen und der Gehalt an Phosphor analysiert.

Das Hydrolysat des Korrosionsinhibitors (***Hydrolysat A***) wurde folgendermassen hergestellt: 50.0 g des Korrosionsinhibitors ***A*** wurden unter Rühren mit 50.0 g Leitungswasser und 5.4 g Natriumhydroxid versetzt. Die entstandenen Lösung wurde bei Raumtemperatur während 2 Tagen leicht gerührt. Durch Zugabe von weiterem Leitungswasser wurde anschliessend der Feststoffgehalt der Lösung auf 10 Massenprozente eingestellt.

**Tabelle 7**

| Penetrationsverhalten | |
|---|---|
| Korrosionsinhibitor | P-Gehalt [mg/100g] |
| Kein | 21 |
| ***A*** | 55 |
| ***Hydrolysat A*** | 52 |
| ***B*** | 40 |
| ***D*** | 46 |
| ***E*** | 38 |

Die Ergebnisse der Tabelle 7 zeigen auf, dass die Korrosionsinhibitoren stark in den Beton hinein penetrieren, was auf Grund der signifikant höheren Phosphorkonzentrationen im Vergleich zur Nullproben ersichtlich ist.

## Patentansprüche

1. Hydraulisch abbindende Zusammensetzung, **dadurch gekennzeichnet, dass** sie Alkoxygruppen umfassende Ester oder Estersalze von Phosphor-Sauerstoff-Säuren der allgemeinen Formel (I), (II), (III) oder (IV) enthält:
R³-NR⁴ ₖ-[(CH₂)ₙ-PO(OR¹)(OR²)]ₘ (I)
[(R¹O)(R²O)OP-(CH₂)ₙ-]ₘ-NR⁴ ₖ-R⁵-NR⁴ ₖ-[-(CH₂)ₙ-PO(OR¹)(OR²)]ₘ (II)
R³-NR⁴ ₖ-[(CH₂)ₙ-PO(OR¹)(OM)]ₘ (III)
[(MO)(R¹O)OP-(CH₂)ₙ-]ₘ-NR⁴ ₖ-R⁵-NR⁴ ₖ-[-(CH₂)ₙ-PO(OR¹)(OM)]ₘ (IV)
wobei
■ n für eine ganze Zahl von 0 bis 10 steht,
■ m+k=2 ist und m = 1 oder 2 und k = 0 oder 1 sind,
■ es sich bei mindestens einem der Reste R¹, R² sowie gegebenenfalls R³ um eine Alkoxygruppe der allgemeinen Formel -[CH₂-CHR⁶-O]ₗR⁷ handelt, wobei l für 2 bis 30 steht und R⁶ und R⁷ jeweils für H oder CH₃ stehen,
und es sich bei den Resten R¹ und R², soweit es sich nicht um Alkoxygruppen handelt, um geradkettige oder verzweigte, optional substituierte C₁- bis C₆-Alkylgruppen handelt,
und es sich bei R³, soweit es sich nicht um eine Alkoxygruppe handelt, um eine geradkettige oder verzweigte, optional substituierte, C₁- bis C₂₀-Alkylgruppe oder Arylgruppe handelt,
■ R⁴ für H oder eine geradkettige oder verzweigte, optional substituierte C₁- bis C₆-Alkylgruppe steht,
■ R⁵ eine zweiwertige, verbrückende Gruppe bedeutet, und
■ M für mindestens ein Kation ausgewählt aus der Gruppe von Alkali-, Erdalkali- oder Ammoniumionen steht.

2. Hydraulisch abbindende Zusammensetzung gemäss Anspruch 1, **dadurch gekennzeichnet, dass** n für 0 oder 1 steht.

3. Hydraulisch abbindende Zusammensetzung gemäss Anspruch 1 oder 2, **dadurch gekennzeichnet, dass** k für 1 und m für 1 stehen.

4. Hydraulisch abbindende Zusammensetzung gemäss einem der vorhergehenden Ansprüche, **dadurch gekennzeichnet, dass** l für einen Wert von 3 bis 20 steht.

5. Hydraulisch abbindende Zusammensetzung gemäss einem der vorhergehenden Ansprüche, **dadurch gekennzeichnet, dass** R⁶ für H steht.

6. Hydraulisch abbindende Zusammensetzung gemäss einem der vorhergehenden Ansprüche, **dadurch gekennzeichnet, dass** R⁶ für H steht.

7. Hydraulisch abbindende Zusammensetzung gemäss einem der vorher gehenden Ansprüche, **dadurch gekennzeichnet, dass** sie zusätzlich mindestens einen weiteren Korrosionsinhibitor ausgewählt aus der Gruppe umfassend Monoethanolamin, Diethanolamin, Triethanolamin, N-Methylethanolamin, N,N-Dimethylethanolamin, N-Ethylethanolamin, N,N-Diethylethanolamin, N-Methyldiethanolamin, 2-Hydroxyethyl-ethylendiamin, sowie Salze organischer Säuren davon, enthält.

8. Oberflächenmodifizierungsmittel für Baustahl, **dadurch gekennzeichnet, dass** es Alkoxygruppen umfassende Ester oder Estersalze von Phosphor-Sauerstoff-Säuren der allgemeinen Formel (I), (II), (III) oder (IV) enthält oder daraus besteht:
R₃-NR⁴ ₖ-[(CH₂)ₙ-PO(OR¹)(OR₂)]ₘ (I)
[(R¹O)(R²O)OP-(CH₂)ₙ-]ₘ-NR⁴ ₖ-R⁵-NR⁴ ₖ-[-(CH₂)ₙ-PO(OR¹)(OR²)]ₘ (II)
R³-NR⁴ ₖ-[(CH₂)ₙ-PO(OR¹)(OM)]ₘ (III)
[(MO)(R¹O)OP-(CH₂)ₙ-]ₘ-NR⁴ ₖ-R⁵-NR⁴ ₖ-[-(CH₂)ₙ-PO(OR¹)(OM)]ₘ (IV)
wobei
■ n für eine ganze Zahl von 0 bis 10 steht,
■ m+k=2 ist und m = 1 oder 2 und k = 0 oder 1 sind,
■ es sich bei mindestens einem der Reste R¹, R² sowie gegebenenfalls R³ um eine Alkoxygruppe der allgemeinen Formel -[CH₂-CHR⁶-O]ₗR⁷ handelt, wobei I für 2 bis 30 steht und R⁶ und R⁷ jeweils für H oder CH₃ stehen,
und es sich bei den Resten R¹ und R², soweit es sich nicht um Alkoxygruppen handelt, um geradkettige oder verzweigte, optional substituierte C₁- bis C₆-Alkylgruppen handelt,
und es sich bei R³, soweit es sich nicht um eine Alkoxygruppe handelt, um eine geradkettige oder verzweigte, optional substituierte, C₁- bis C₂₀-Alkylgruppe oder Arylgruppe handelt,
■ R⁴ für H oder eine geradkettige oder verzweigte, optional substituierte C₁- bis C₆-Alkylgruppe steht,
■ R⁵ eine zweiwertige, verbrückende Gruppe bedeutet, und
■ M für mindestens ein Kation ausgewählt aus der Gruppe von Alkali-, Erdalkali- oder Ammoniumionen steht.

9. Oberflächenmodifizierungsmittel für Baustahl gemäss Anspruch 8, **dadurch gekennzeichnet, dass** n für 0 oder 1 steht.

10. Oberflächenmodifizierungsmittel für Baustahl gemäss Anspruch 8 oder 9, **dadurch gekennzeichnet, dass** k für 1 und m für 1 stehen.

11. Oberflächenmodifizierungsmittel für Baustahl gemäss einem der Ansprüche 8 bis 10, **dadurch gekennzeichnet, dass** l für einen Wert von 3 bis 20 steht.

12. Oberflächenmodifizierungsmittel für Baustahl gemäss einem der Ansprüche 8 bis 11, **dadurch gekennzeichnet, dass** R⁶ für H steht.

13. Oberflächenmodifizierungsmittel für Baustahl gemäss einem der Ansprüche 8 bis 12, **dadurch gekennzeichnet, dass** R⁶ für H steht.

14. Oberflächenmodifizierungsmittel für Baustahl gemäss einem der Ansprüche der Ansprüche 8 bis 13, **dadurch gekennzeichnet, dass** sie zusätzlich mindestens einen weiteren Korrosionsinhibitor ausgewählt aus der Gruppe umfassend Monoethanolamin, Diethanolamin, Triethanolamin, N-Methylethanolamin, N,N-Dimethylethanolamin, N-Ethylethanolamin, N,N-Diethylethanolamin, N-Methyldiethanolamin, 2-Hydroxyethyl-ethylendiamin, sowie Salze organischer Säuren davon, enthält.

15. Verfahren zur Herstellen von stahlenthaltenden Bauwerken, **dadurch gekennzeichnet, dass** eine hydraulisch abbindende Zusammensetzung gemäss einem der Ansprüche 1 bis 7 mit Wasser vermischt wird, damit den Stahl überdeckt oder umhüllt und erhärtet.

16. Verfahren zur Herstellen von stahlenthaltenden Bauwerken, **dadurch gekennzeichnet, dass** ein Oberflächenmodifizierungsmittel gemäss einem der Ansprüche 8 bis 14 auf die Stahloberfläche appliziert wird und der oberflächenmodifizierte Stahl anschliessend mit einer hydraulisch abbindenden Zusammensetzung nach deren Vermischung mit Wasser überdeckt oder umhüllt wird.

17. Verfahren zur Sanierung von Stahlbeton, **dadurch gekennzeichnet, dass** ein Oberflächenmodifizierungsmittel gemäss einem der Ansprüche 8 bis 14 auf die Betonoberfläche appliziert wird.

18. Verfahren zur Sanierung von Stahlbeton, **dadurch gekennzeichnet, dass** ein Oberflächenmodifizierungsmittel gemäss einem der Ansprüche 8 bis 14 auf freigelegten Armierungsstahl appliziert wird und anschliessend mit einem Reparaturmörtel oder Beton wieder überschichtet wird.

19. Verfahren zur Sanierung von Stahlbeton, **dadurch gekennzeichnet, dass** eine hydraulisch abbindende Zusammensetzung gemäss einem der Ansprüche 1 bis 7 auf freigelegten Armierungsstahl appliziert wird.

20. Verwendung einer hydraulisch abbindende Zusammensetzung gemäss einem der Ansprüche 1 bis 7 zum Schutz von Stahlbeton.

21. Verwendung eines Oberflächenmodifizierungsmittels gemäss einem der Ansprüche 8 bis 14 zum Schutz von Stahlbeton.

22. Verfahren zur Herstellung einer hydraulisch abbindende Zusammensetzung gemäss einem der Ansprüche 1 bis 7, **dadurch gekennzeichnet, dass** Alkoxygruppen umfassende Ester oder Estersalze von Phosphor-Sauerstoff-Säuren dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben wird.
